# EUROPEAN PATENT APPLICATION

(11) **EP 2 506 504 A1**
(43) Date of publication of application: **03.10.2012**
(21) Application number: 10832779.2
(22) Date of filing: 25.08.2010
(51) Int. Cl.: H04L 12/56

(54) **RELAY DEVICE**

(30) Priority: 26.11.2009 JP 2009268484
(71) Applicant: NEC Corporation, Tokyo 108-8001 (JP)
(72) Inventor: IZAWA, Tetsu, Tokyo 108-8001 (JP); TAKASHIMA, Masanori, Tokyo 108-8001 (JP)
(74) Representative: Robson, Aidan John
(86) International application number: PCT/JP2010/005215
(87) International publication number: WO 2011/064923

(57) **Abstract**

A relay device 100 transmits received data to a transfer destination device. The data includes attribute information representing each of a plurality of attributes. The relay device includes a first storage section 101 which stores first rule information for specifying the transfer destination device based on the attribute information with respect to each of the attributes constituting a first attribute group including the plurality of the attributes, a second storage section 102 which stores second rule information for specifying the transfer destination device based on the attribute information with respect to each of the attributes constituting a second attribute group including part of the plurality of the attributes, and a transfer control section 103 which, in the case where the information quantity stored in the first storage section is larger than a preset first threshold quantity, if the information for specifying the transfer destination device only based on the attribute information with respect to each of the attributes constituting the second attribute group is stored in the first storage section as the first rule information, migrates the first rule information to the second storage section.

## Description

### TECHNICAL FIELD

The present invention relates to a relay device which transfers data.

### BACKGROUND ART

A relay device which is connected to each of a plurality of external devices and transmits data received from one of the external devices to a transfer destination device which is another one of the external devices (that is, transfers data) has been known. The data includes attribute information representing each of the attributes held by the data.

The attributes of the data include an IP (Internet Protocol) address of the source of the data, a MAC (Media Access Control) address of the source of the data, an IP address of the destination of the data, a MAC address of the destination of the data, and the like.

As one of relay devices of this type, a relay device described in Patent Document 1 stores, in a storage device, rule information for specifying a transfer destination device based on attribute information. The relay device specifies a transfer destination device based on the attribute information included in the received data and the rule information stored in the storage device. Then, the relay device transmits (transfers) the received data to the specified transfer destination device.

Patent Document 1: JP 2008-86048 A

In the relay device, however, if the information quantity of the rule information stored in the storage device becomes excessive, newly received rule information cannot be stored in the storage device. As such, in that case, the relay device is not able to transfer data based on all of the stored rule information and the received rule information.

Further, a relay device may include a first transfer processing execution section and a second transfer processing execution section, each of which transfers data based on rule information in a different form. In that case, the first transfer processing execution section transfers data based on first rule information for specifying a transfer destination device based on attribute information with respect to each of the attributes constituting a first attribute group consisting of a plurality of the attributes. Meanwhile, the second transfer processing execution section transfers data based on second rule information for specifying a transfer destination device based on attribute information with respect to each of the attributes constituting a second attribute group consisting of part of a plurality of the attributes. The first rule information is stored in a first storage device, and the second rule information is stored in a second storage device.

For example, there may be a case where the first attribute group includes an IP address of the source of the data, a MAC address of the source of the data, an IP address of the destination of the data, and a MAC address of the destination of the data, and the second attribute group includes an IP address of the destination of the data.

In that case, it is considered preferable that the relay device is adapted such that when the information quantity of the first rule information stored in the first storage device becomes excessive, the relay device converts the newly received first rule information into second rule information, and stores the converted second rule information in the second storage device. In such a case, however, part of the received first rule information will be lost. As such, the relay device is unable to transfer data based on all of the stored rule information and the received rule information.

Accordingly, an object of the present invention is to provide a relay device capable of solving the above-described problem that "there is a case where data is unable to be transferred based on the entire rule information".

In order to achieve the object, a relay device, which is an aspect of the present invention, is a device which is connected with each of a plurality of external devices and transmits data received from one of the external devices to a transfer destination device which is another one of the external devices.

The data includes attribute information representing each of a plurality of attributes held by the data.
The relay device includes
a first rule information storage means for storing first rule information for specifying the transfer destination device based on the attribute information with respect to each of the attributes constituting a first attribute group including the plurality of the attributes;
a second rule information storage means for storing second rule information for specifying the transfer destination device based on the attribute information with respect to each of the one or more attributes constituting a second attribute group including part of the plurality of the attributes; and
a transfer control means for performing migration processing including, in the case where the information quantity stored in the first rule information storage means is larger than a preset first threshold quantity, if the information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

Further, a relay method, which is another aspect of the present invention, is applied to a relay device which is connected with each of a plurality of external devices and transmits data received from one of the external devices to a transfer destination device which is another one of the external devices.
The data includes attribute information representing each of a plurality of attributes held by the data.
The relay device includes
a first rule information storage means for storing first rule information for specifying the transfer destination device based on the attribute information with respect to each of the attributes constituting a first attribute group including the plurality of the attributes, and
a second rule information storage means for storing second rule information for specifying the transfer destination device based on the attribute information with respect to each of the one or more attributes constituting a second attribute group including part of the plurality of the attributes.
The method includes
performing migration processing including, in the case where the information quantity stored in the first rule information storage means is larger than a preset first threshold quantity, if the information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

Further, a program, which is another aspect of the present invention, is a program implemented by a relay device which is connected with each of a plurality of external devices and transmits data received from one of the external devices to a transfer destination device which is another one of the external devices.

The data includes attribute information representing each of a plurality of attributes held by the data.
The relay device includes
a first rule information storage means for storing first rule information for specifying the transfer destination device based on the attribute information with respect to each of the attributes constituting a first attribute group including the plurality of the attributes, and
a second rule information storage means for storing second rule information for specifying the transfer destination device based on the attribute information with respect to each of the one or more attributes constituting a second attribute group including part of the plurality of the attributes.
Further, the program is a program for causing the relay device to realize a transfer control means for performing migration processing including, in the case where the information quantity stored in the first rule information storage means is larger than a preset first threshold quantity, if the information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

With the configurations described above, the present invention is able to transfer data based on the entire rule information.

### BRIEF DESCRIPTION OF DRAWINGS

Fig. 1 is a diagram showing the schematic configuration of a relay device according to a first exemplary embodiment of the present invention.
Fig. 2 is a table showing first rule information stored in a first rule information storage section according to the first exemplary embodiment of the present invention.
Fig. 3 is a table showing second rule information stored in a second rule information storage section according to the first exemplary embodiment of the present invention.
Fig. 4 is a table showing difference information stored in a difference information storage section according to the first exemplary embodiment of the present invention.
Fig 5 is a flowchart showing first rule information registration processing performed by the relay device according to the first exemplary embodiment of the present invention.
Fig 6 is a flowchart showing packet transfer processing performed by the relay device according to the first exemplary embodiment of the present invention.
Fig 7 is a flowchart showing first rule information restoration processing performed by the relay device according to the first exemplary embodiment of the present invention.
Fig. 8 is a block diagram showing the schematic functions of a relay device according to a second exemplary embodiment of the present invention.

### EXEMPLARY EMBODIMENTS

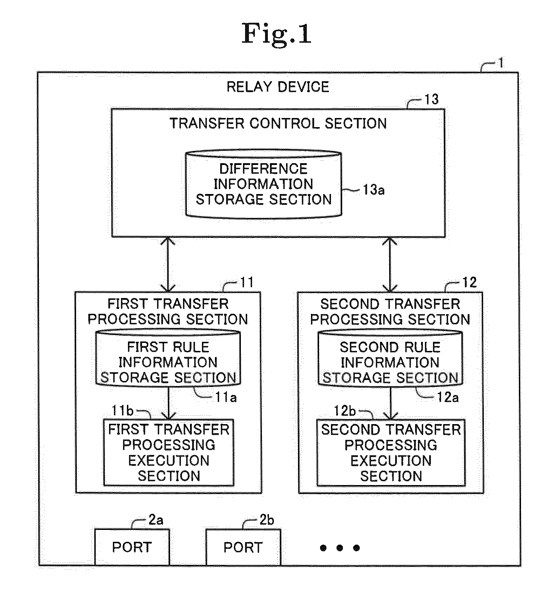

Hereinafter, exemplary embodiments of a relay device, a relay method, and a program, according to the present invention, will be described with reference to Figs. 1 to 8.

### FIRST EXEMPLARY EMBODIMENT

As shown in Fig. 1, a relay device 1 according to a first exemplary embodiment includes a plurality of ports 2a, 2b, ···, a first transfer processing section 11, a second transfer processing section 12, and a transfer control section 13. The relay device 1 is connected with respective external devices, not shown, via the ports 2a, 2b, ···.

The relay device 1 is adapted to transmit data, received from one of the external devices, to a transfer destination device which is another one of the external devices. In this example, data is a packet. It should be noted that data may be a frame or a segment.

Further, data includes attribute information representing each of a plurality of attributes held by the data. In this example, the attributes include an IP (Internet Protocol) address of the source of the data, a MAC (Media Access Control) address of the source of the data, an IP address of the destination of the data, and a MAC (Media Access Control) address of the destination of the data. It should be noted that the attributes may include information representing the type of data (for example, data representing voice, data representing video, or the like), information representing the priority of communications, and the like. Further, the attributes may be combinations of any two or more types of the information described above.

Each of the first transfer processing section 11, the second transfer processing section 12, and the transfer control section (transfer control means) 13 is a circuit.
The first transfer processing section 11 includes a first rule information storage section (first rule information storage means) 11a and a first transfer processing execution section (first transfer processing execution means) 11b.

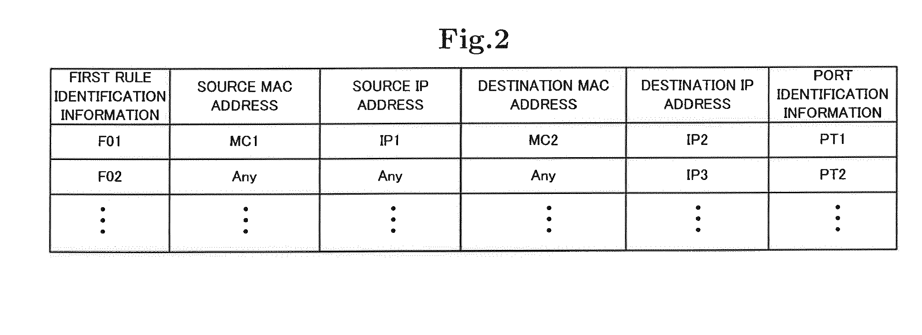

The first rule information storage section 11a stores first rule information for specifying a transfer destination device based on attribute information with respect to each of the attributes constituting a first attribute group consisting of the above-described attributes.
As shown in Fig. 2, the first rule information includes first rule identification information for identifying the first rule information, a source MAC address, a source IP address, a destination MAC address, a destination IP address, and port identification information for identifying a port.

The source MAC address is information representing the range of the attribute information with respect to the MAC address (that is, the range of the MAC address) of the source of the data. The source IP address is information representing the range of the attribute information with respect to the IP address (that is, the range of the IP address) of the source of the data. The destination MAC address is information representing the range of the attribute information with respect to the MAC address (that is, the range of the MAC address) of the destination of the data. The destination IP address is information representing the range of the attribute information with respect to the IP address (that is, the range of the IP address) of the destination of the data.

The source MAC address, the source IP address, the destination MAC address, and the destination IP address constitute first range specifying information representing the range of the attribute information with respect to the respective attributes constituting the first attribute group. As such, it can be said that the first rule information includes a first attribute condition that with respect to the respective attributes constituting the first attribute group, the attribute information included in the data is within the range represented by the first range specifying information.
Further, the port identification information constitutes transfer destination identification information for identifying the transfer destination device.

The first transfer processing section 11 receives first rule information. In this example, the first transfer processing section 11 receives first rule information input by a user of the relay device 1. It should be noted that the first transfer processing section 11 may receive first rule information received by the relay device 1 from an external device, or receive first rule information generated by the relay device 1.
The first transfer processing section 11 stores the received first rule information in the first rule information storage section 11a.

When the relay device 1 receives data, the first transfer processing execution section 11b specifies the transfer destination device, based on the attribute information included in the received data and the first rule information stored in the first rule information storage section 11a. The first transfer processing execution section 11b transmits the data to the specified transfer destination device.

To be specific, the first transfer processing execution section 11b determines whether or not the attribute information included in the received data satisfies any of the first attribute conditions included in the first rule information stored in the first rule information storage section 11a. In this example, the first transfer processing execution section 11b determines that the attribute information included in the received data satisfies the first attribute condition if, with respect to the respective attributes constituting the first attribute group, the attribute information included in the data is within the range represented by the first range specifying information.

When the first transfer processing execution section 11b determines that the attribute information included in the received data satisfies any of the first attribute conditions, the first transfer processing execution section 11b transmits (transfers) the data to an external device via a port identified by the port identification information included in the first rule information including the satisfied first attribute information. It should be noted that if information indicating "disposal" is set as the port identification information, the first transfer processing execution section 11b disposes of (discards) the data without transferring it to any external device.

The second transfer processing section 12 includes a second rule information storage section (second rule information storage means) 12a and a second transfer processing execution section (second transfer processing execution means) 12b.

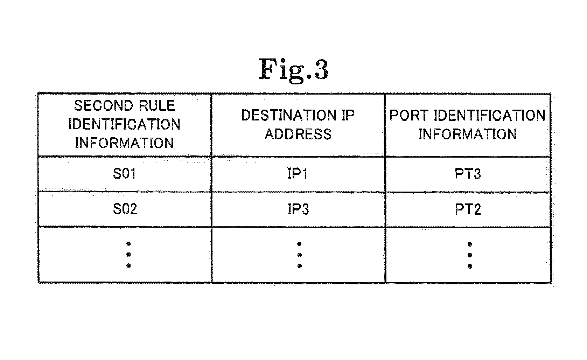

The second rule information storage section 12a stores second rule information for specifying the transfer destination device based on the attribute information with respect to the respective attributes constituting a second attribute group consisting of part (in this example, IP address of the data destination) of the attributes.
As shown in Fig. 3, the second rule information includes second rule identification information for identifying the second rule information, a destination IP address, and port identification information.

The destination IP address is information representing the range of the attribute information with respect to the IP address (that is, the range of the IP address) of the destination of the data. The destination IP address constitutes second range specifying information representing the range of the attribute information with respect to the respective attributes constituting the second attribute group. As such, it can be said that the second rule information includes a second attribute condition that with respect to the respective attributes constituting the second attribute group, the attribute information included in the data is within the range represented by the second range specifying information.

The second transfer processing section 12 receives second rule information. In this example, the second transfer processing section 12 receives second rule information input by a user of the relay device 1. It should be noted that the second transfer processing section 12 may receive second rule information received by the relay device 1 from an external device, or receive second rule information generated by the relay device 1.
The second transfer processing section 12 stores the received second rule information in the second rule information storage section 12a.

When the relay device 1 receives data, the second transfer processing execution section 12b specifies the transfer destination device, based on the attribute information included in the received data and the second rule information stored in the second rule information storage section 12a. The second transfer processing execution section 12b transmits the data to the specified transfer destination device.

To be specific, the second transfer processing execution section 12b determines whether or not the attribute information included in the received data satisfies any of the second attribute conditions included in the second rule information stored in the second rule information storage section 12a. In this example, the second transfer processing execution section 12b determines that the attribute information included in the received data satisfies the second attribute conditions if, with respect to the respective attributes constituting the second attribute group, the attribute information included in the data is within the range represented by the second range specifying information.

When the second transfer processing execution section 12b determines that the attribute information included in the received data satisfies any of the second attribute conditions, the second transfer processing execution section 12b transmits (transfers) the data to an external device via a port identified by the port identification information included in the second rule information including the satisfied second attribute information. It should be noted that if information indicating "disposal" is set as the port identification information, the second transfer processing execution section 12b disposes of (discards) the data without transferring it to the external device.

It should be noted that in the case where the first transfer processing execution section 11b determines that the attribute information included in the data received by the relay device 1 satisfies any of the first attribute conditions included in the first rule information stored in the first rule information storage section 11a, the second transfer processing execution section 12b does not execute the processing for transferring or disposing the data.

The transfer control section 13 includes a difference information storage section (difference information storage means) 13a.
When the first transfer processing section 11 receives the first rule information, the transfer control section 13 determines whether or not the information quantity (quantity of the first rule information) stored in the first rule information storage section 11a is larger than a preset first threshold quantity.

If the transfer control section 13 determines that the information quantity stored in the first rule information storage section 11a is larger than the first threshold quantity, the transfer control section 13 determines whether or not the first rule information including the first range specifying information which specifies the range including arbitrary attribute information (in this example, represented as "Any"), with respect to the respective attributes other than the attributes constituting the second attribute group among the attributes constituting the first attribute group, is stored in the first rule information storage section 11a.

It can be said that with respect to the respective attributes other than the attributes constituting the second attribute group among the attributes constituting the first attribute group, the first rule information including the first range specifying information which specifies the range including arbitrary attribute information, is first rule information which includes the conditions only for the second attribute group as the first attribute conditions. Further, it can also be said that such first rule information is information for specifying the transfer destination device only based on the attribute information with respect to the respective attributes constituting the second attribute group.

It should be noted that in this example, the attributes other than the attributes constituting the second attribute group, among the attributes constituting the first attribute group, are the MAC address of the source of the data, the IP address of the source of the data, and the MAC address of the destination of the data.

If the transfer control section 13 determines that the first rule information including the first range specifying information which specifies the range including arbitrary attribute information, with respect to the respective attributes other than the attributes constituting the second attribute group among the attributes constituting the first attribute group, is stored in the first rule information storage section 11a, the transfer control section 13 performs migration processing on the first rule information.

The migration processing includes processing to store, in the second rule information storage section 12a, the second rule information which includes the second attribute conditions including the second range specifying information including the part specifying the range with respect to the respective attributes constituting the second attribute group of the first range specifying information included in the first rule information, and includes the transfer destination identification information included in the first rule information. Further, the migration processing also includes processing to delete the first rule information from the first rule information storage section 11a.

It can be said that the second rule information, newly stored in the course of the migration processing, is information which includes the first attribute conditions included in the first rule information as the second attribute conditions and includes the transfer destination identification information included in the first rule information.

Further, when performing the migration processing, the transfer control section 13 generates, as difference information, part constituting a portion of the first range specifying information included in the first rule information to be deleted in the course of the migration processing, and specifying the range with respect to the respective attributes other than the attributes constituting the second attribute group among the attributes constituting the first attribute group. The transfer control section 13 stores the generated difference information in the difference information storage section 13a.

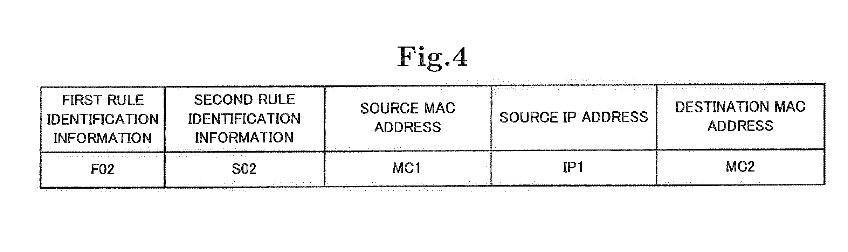

As shown in Fig. 4, the difference information includes the first rule identification information for identifying the first rule information to be deleted in the course of the migration processing, the second rule identification information for identifying the second rule information stored in the course of the migration processing, the source MAC address, the source IP address, and the destination MAC address.

In addition, each time a preset determination period has elapsed, the transfer control section 13 determines whether or not the information quantity stored in the first rule information storage section 11a is smaller than a preset second threshold quantity. In this example, the second threshold quantity is a smaller quantity than the first threshold quantity.

When the transfer control section 13 determines that the information quantity stored in the first rule information storage section 11a is smaller than the second threshold quantity, the transfer control section 13 determines whether or not the difference information is stored in the difference information storage section 13a.

When the transfer control section 13 determines that the difference information is stored in the difference information storage section 13a, the transfer control section 13 generates first rule information deleted in the course of the migration processing, based on the difference information and the second rule information identified by the second rule identification information included in the difference information (that is, second rule information stored in the second rule information storage section 12a in the course of the migration processing).

Then, the transfer control section 13 performs restoration processing which includes storing the generated first rule information in the first rule information storage section 11a and deleting the second rule information from the second rule information storage section 12a.

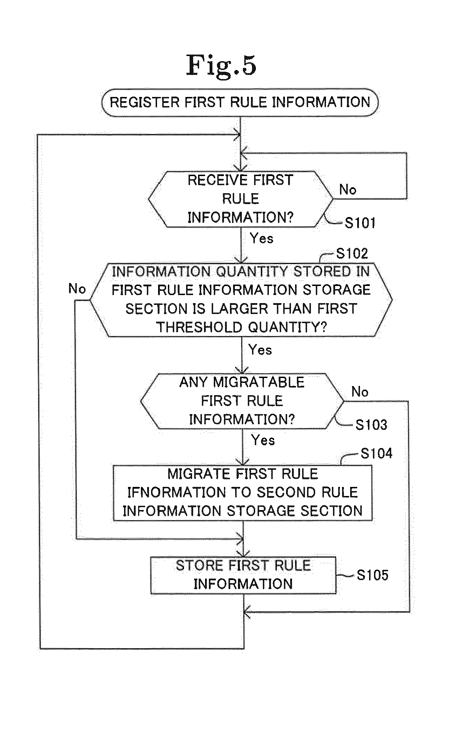

Next, operation of the relay device 1 will be described specifically.
The relay device 1 is adapted to perform first rule information registration processing shown in the flowchart of Fig. 5 when the relay device 1 is activated.

To be specific, when the relay device 1 starts first rule information registration processing, the relay device 1 waits until it receives first rule information at step S101. Then, upon reception of the first rule information, the relay device 1 determines to be "Yes" and proceeds to step S102.

Then, the relay device 1 determines whether or not the information quantity stored in the first rule information storage section 11a is larger than a first threshold quantity. Now, it is assumed that the information quantity stored in the first rule information storage section 11a is smaller than the first threshold quantity. In this case, the relay device 1 determines to be "No" and proceeds to step S105, and stores the received first rule information in the first rule information storage section 11a. Then, the relay device 1 returns to step S101, and repeats the processing from step S101 to step S105.

It is assumed that the information quantity stored in the first rule information storage section 11a then becomes larger than the first threshold quantity. In this case, the relay device 1 determines to be "Yes" at step S102 and proceeds to step S103.

Then, the relay device 1 determines whether or not there is any migratable first rule information. Specifically, with respect to the respective attributes other than the attributes constituting the second attribute group among the attributes constituting the first attribute group, the relay device 1 determines whether or not the first rule information including the first range specifying information which specifies the range including arbitrary attribute information (in this example, indicated as "Any") is stored in the first rule information storage section 11a.

Now, the case where the first rule information storage section 11a stores the first rule information, as shown in Fig. 2, is assumed. In this case, the first rule information including the first rule identification information "F02" is information including the first range specifying information which specifies the range including arbitrary attribute information, with respect to the respective attributes other than the attributes constituting the second attribute group among the attributes constituting the first attribute group.

Accordingly, the relay device 1 determines to be "Yes" at step S103 and proceeds to step S104, and migrates the first rule information to the second rule information storage section 12a.

To be specific, the relay device 1 stores, in the second rule information storage section 12a, second rule information which includes second attribute conditions including second range specifying information (in this example, destination IP address "IP3") including the part specifying the range with respect to the respective attributes constituting the second attribute group of the first range specifying information included in the first rule information, and includes transfer destination identification information (in this example, port identification information "PT2") included in the first rule information.

Further, the relay device 1 deletes the first rule information from the first rule information storage section 11a.
Then, the relay device 1 proceeds to step S105 and, similar to the above case, stores the received first rule information in the first rule information storage section 11a.

It should be noted that if the first rule information including the first range specifying information which specifies the range including arbitrary attribute information, with respect to the respective attributes other than the attributes constituting the second attribute group among the attributes constituting the first attribute group, is not stored in the first rule information storage section 11a (that is, there is no migratable first rule information), the relay device 1 determines to be "No" at step S103 and returns to step S101.

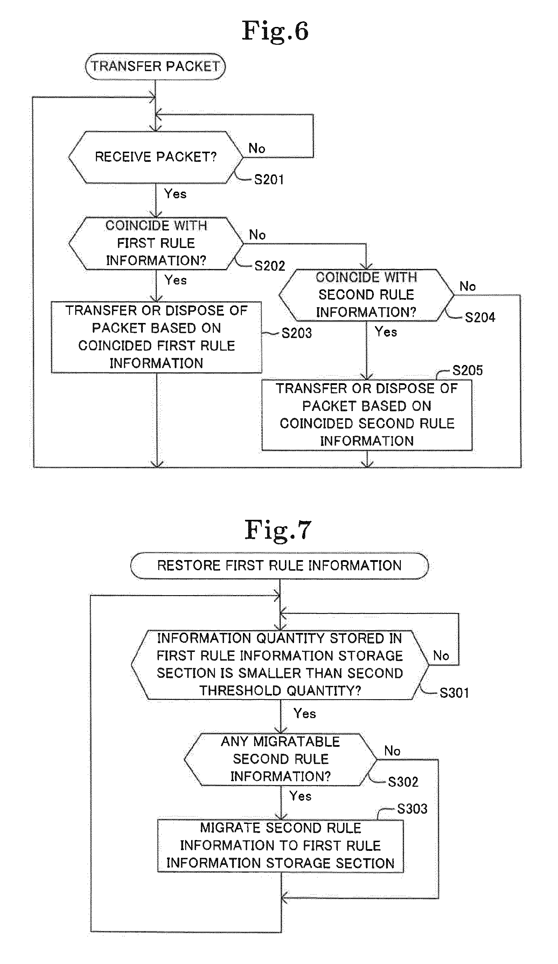

Meanwhile, the relay device 1 is adapted to perform packet transfer processing shown in the flowchart of Fig. 6 when the relay device 1 is activated.

To be specific, when the relay device 1 starts packet transfer processing, the relay device 1 waits until it receives (receives from an external device) a packet. Upon reception of the packet, the relay device 1 determines to be "Yes" and proceeds to step S202.

Then, the relay device 1 determines whether or not the received packet coincides with the first rule information. Specifically, the relay device 1 determines whether or not the attribute information included in the received packet satisfies any of the first attribute conditions included in the first rule information stored in the first rule information storage section 11a. As described above, the relay device 1 determines that, with respect to the respective attributes constituting the first attribute group, the attribute information included in the received packet satisfies the first attribute condition if the attribute information included in the packet is within the range represented by the first range specifying information.

Now, it is assumed that the received packet includes "MC1" as attribute information representing the MAC address of the source of the data, includes "IP1" as attribute information representing the IP address of the source of the data, includes "MC2" as attribute information representing the MAC address of the destination of the data, and includes "IP2" as attribute information representing the IP address of the destination of the data.

In this case, the received packet coincides with the first rule information including the first rule identification information "F01". Accordingly, the relay device 1 determines to be "Yes" at step S202 and proceeds to step S203.

Then, the relay device 1 transfers the packet based on the coincided first rule information. Specifically, the relay device 1 transmits (transfers) the packet to an external device via the port 2a, 2b, ··· identified by the port identification information (in this example, "PT1") in the first rule information including the first attribute information satisfied by the attribute information included in the received packet.

It should be noted that if information indicating "disposal" is set as the port identification information, the relay device 1 disposes of (discards) the packet without transferring it to any external device. Then, the relay device 1 returns to step S201, and repeats the processing from step S201 to step S205.

It is assumed that the relay device 1 then receives a packet including "MC2" as attribute information representing the MAC address of the source of the data, "IP2" as attribute information representing the IP address of the source of the data, "MC1" as attribute information representing the MAC address of the destination of the data, and "IP1" as attribute information representing the IP address of the destination of the data.

In that case, the relay device 1 determines to be "No" at step S202 and proceeds to step S204. Then, the relay device 1 determines whether or not the received packet coincides with the second rule information. Specifically, the relay device 1 determines whether or not the attribute information included in the received packet satisfies any of the second attribute conditions included in the second rule information stored in the second rule information storage section 12a. As described above, the relay device 1 determines that, with respect to the respective attributes constituting the second attribute group, the attribute information included in the received packet satisfies the second attribute condition if the attribute information included in the packet is within the range represented by the second range specifying information.

According to the above assumption, the received packet coincides with the second rule information including the second rule identification information "S01". As such, the relay device 1 determines to be "Yes" at step S204 and proceeds to step S205.

Then, the relay device 1 transfers the packet based on the coincided second rule information. Specifically, the relay device 1 transmits (transfers) the packet to an external device via the port 2a, 2b, ··· identified by the port identification information (in this example, "PT3") in the second rule information including the second attribute condition satisfied by the attribute information included in the received packet.

It should be noted that if information indicating "disposal" is set as the port identification information, the relay device 1 disposes (discards) the packet without transferring it to any external device. Then, the relay device 1 returns to step S201 and repeats the processing from step S201 to step S205.

If the received packet does not coincide with either the first rule information or second rule information, the relay device 1 determines to be "No" at both steps S202 and S204, and returns to step S201 without transferring the packet. As such, in that case, the relay device 1 disposes of the received packet.

It should be noted that the relay device 1 may be adapted to, if the received packet does not coincide with either the first rule information or the second rule information, acquire information for specifying the transfer destination device of the packet from an external device. In that case, the relay device 1 transfers the packet to the transfer destination device specified by the acquired information. Further, the relay device 1 may be adapted to generate information for specifying the transfer destination device of the packet.

Meanwhile, the relay device 1 is adapted to perform first rule information restoration processing, shown in the flowchart of Fig. 7, each time the determination period has elapsed.

To be specific, when the relay device 1 starts first rule information restoration processing, the relay device 1 waits until the information quantity stored in the first rule information storage section 11a becomes smaller than the second threshold quantity, at step S301.

Now, it is assumed that the information quantity stored in the first rule information storage section 11a becomes smaller than the threshold quantity. In this case, the relay device 1 determines to be "Yes" and proceeds to step S302.

Then, the relay device 1 determines whether or not there is any migratable second rule information. Specifically, the relay device 1 determines whether or not difference information is stored in the difference information storage section 13a. Now, it is assumed that difference information is stored in the difference information storage section 13a, as shown in Fig. 4.

In this case, the relay device 1 determines to be "Yes" and proceeds to step S303, and migrates the second rule information to the first rule information storage section 11a. Specifically, the relay device 1 generates first rule information based on the stored difference information and the second rule information identified by the second rule identification information included in the difference information. As such, the relay device 1 generates first rule information including the first rule identification information, the source MAC address, the source IP address, and the destination MAC address which are included in the difference information; and the destination IP address and the port identification information which are included in the second rule information.

Then, the transfer control section 13 performs restoration processing, which includes storing the generated first rule information in the first rule information storage section 11a, and deleting the second rule information from the second rule information storage section 12a. Then, the relay device 1 returns to step S301 and repeats the processing from step S301 to step S303.

It should be noted that if difference information is not stored in the difference information storage section 13a, the relay device 1 determines to be "No" at step S302 and returns to step S301 without performing the restoration processing.

As described above, according to the first exemplary embodiment of the relay device of the present invention, if the information quantity stored in the first rule information storage section 11a becomes excessive, the relay device 1 performs migration processing on the first rule information consisting of information for specifying the transfer destination device only based on the attribute information with respect to the respective attributes constituting the second attribute group, of the stored first rule information.

Thereby, when the relay device 1 newly receives first rule information, the relay device 1 is able to store the received first rule information in the first rule information storage section 11a. Further, the first rule information, which is the target of migration processing, consists of the information for specifying the transfer destination device only based on the attribute information with respect to the respective attributes constituting the second attribute group. Accordingly, if the relay device 1 receives any packets (data) before and after the migration processing, the relay device 1 is able to transmit the packets to the same transfer destination device.
As described above, the relay device 1 is able to transfer packets based on the entire rule information.

Further, when the information quantity stored in the first rule information storage section 11a becomes sufficiently small, the relay device 1 according to the first exemplary embodiment is able to restore the first rule information which was the target of the migration processing.

It should be noted that the relay device 1 may be adapted to receive a deletion instruction to delete the first rule information stored in the first rule information storage section 11a. In this example, the deletion instruction includes first rule identification information for identifying the first rule information. In this case, when the first rule information identified by the deletion instruction has been migrated to the second rule information storage section 12a by means of the migration processing, it is preferable that the relay device 1 is adapted to specify the second rule information stored in the second rule information storage section 12a in the course of the migration processing based on the difference information stored in the difference information storage section 13a, and delete the specified second rule information.

Further, the relay device 1 may be adapted to receive a change instruction to change the first rule information (for example, port identification information) stored in the first rule information storage section 11a. In this example, the change instruction includes first rule identification information for identifying the first rule information. In this case, when the first rule information identified by the change instruction has been migrated to the second rule information storage section 12a by means of the migration processing, it is preferable that the relay device 1 is adapted to specify the second rule information stored in the second rule information storage section 12a in the course of the migration processing based on the difference information stored in the difference information storage section 13a, and change the specified second rule information.

### SECOND EXEMPLARY EMBODIMENT

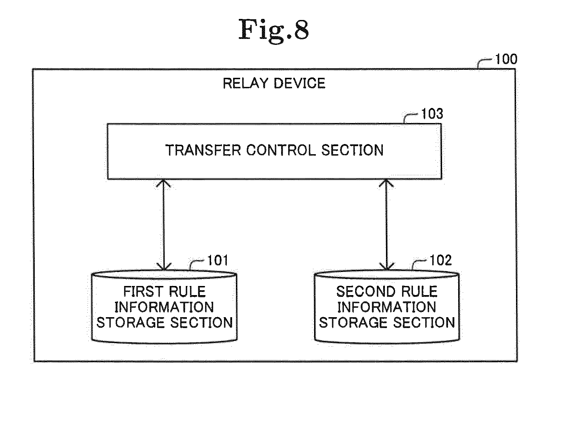

Next, a relay device according to a second exemplary embodiment of the present invention will be described with reference to Fig. 8.
A relay device 100 according to the second exemplary embodiment is connected with each of a plurality of external devices, and transmits data received from one of the external devices to a transfer destination device which is another one of the external devices.

In this example, the data includes attribute information representing each of a plurality of attributes held by the data.

Further, the relay device 100 includes
a first rule information storage section (first rule information storage means) 101 which stores first rule information for specifying the transfer destination device based on the attribute information with respect to each of the attributes constituting a first attribute group including the plurality of the attributes;
a second rule information storage section (second rule information storage means) 102 which stores second rule information for specifying the transfer destination device based on the attribute information with respect to each of the one or more attributes constituting a second attribute group including part of the plurality of the attributes; and
a transfer control section (transfer control means) 103 which performs migration processing including, in the case where the information quantity stored in the first rule information storage means is larger than a preset first threshold quantity, if the information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

According to this configuration, if the information quantity stored in the first rule information storage section 101 becomes excessive, the relay device 100 performs migration processing on the first rule information consisting of information for specifying the transfer destination device only based on the attribute information with respect to the respective attributes constituting the second attribute group, of the stored first rule information.

Thereby, when the relay device 100 newly receives first rule information, the relay device 100 is able to store the received first rule information in the first rule information storage section 101. Further, the first rule information, which is the target of migration processing, consists of the information for specifying the transfer destination device only based on the attribute information with respect to the respective attributes constituting the second attribute group. Accordingly, if the relay device 100 receives any data before and after the migration processing, the relay device 100 is able to transmit the data to the same transfer destination device.
As described above, the relay device 100 is able to transfer data based on the entire rule information.

In that case, it is preferable that the relay device further includes
a first transfer processing execution means for specifying the transfer destination device based on the attribute information included in the received data and the first rule information stored in the first rule information storage means, and transmitting the data to the specified transfer destination device; and
a second transfer processing execution means for specifying the transfer destination device based on the attribute information included in the received data and the second rule information stored in the second rule information storage means, and transmitting the data to the specified transfer destination device.

In that case, it is preferable that
the first rule information includes one or more first attribute conditions with respect to the first attribute group, and transfer destination identification information for identifying the transfer destination device, that
the second rule information includes one or more second attribute conditions with respect to the second attribute group, and transfer destination identification information for identifying the transfer destination device, that
the first transfer processing execution means is adapted to, if the attribute information included in the received data satisfies any of the first attribute conditions included in the stored first rule information, transmit the data to the transfer destination device identified by the transfer destination identification information included in the first rule information including the satisfied first attribute condition, that
the second transfer processing execution means is adapted to, if the attribute information included in the received data satisfies any of the second attribute conditions included in the stored second rule information, transmit the data to the transfer destination device identified by the transfer destination identification information included in the second rule information including the satisfied second attribute condition, and that
the transfer control means is adapted to perform the migration processing including, in the case where the information quantity stored in the first rule information storage means is larger than the first threshold quantity, if the first rule information including conditions only with respect to the second attribute group as the first attribute conditions is stored in the first rule information storage means, storing, in the second rule information storage means, the second rule information which includes the first attribute conditions included in the first rule information as the second attribute conditions and includes the transfer destination identification information included in the first rule information, and deleting the first rule information from the first rule information storage means.

In that case, it is preferable that
one of the first attribute conditions is that first range specifying information representing the range of the attribute information with respect to each of the attributes constituting the first attribute group is included, and that with respect to each of the attributes constituting the first attribute group, the attribute information included in the data is within the range represented by the first range specifying information, that
one of the second attribute conditions is that second range specifying information representing the range of the attribute information with respect to each of the attributes constituting the second attribute group is included, and that with respect to each of the attributes constituting the second attribute group, the attribute information included in the data is within the range represented by the second range specifying information, and that
the transfer control means is adapted to perform the migration processing including, in the case where the information quantity stored in the first rule information storage means is larger than the first threshold quantity, if the first rule information is stored in the first rule information storage means, the first rule information including the first range specifying information specifying the range including arbitrary attribute information with respect to each of the attributes other than the attributes constituting the second attribute group among the attributes constituting the first attribute group, storing, in the second rule information storage means, the second rule information which includes the second attribute conditions including the second range specifying information including the part specifying the range with respect to each of the attributes constituting the second attribute group of the first range specifying information, and includes the transfer destination identification information included in the first rule information, and deleting the first rule information from the first rule information storage means.

In that case, it is preferable that
the relay device further includes a difference information storage means for storing, as difference information, the part constituting a portion of the first range specifying information included in the first rule information to be deleted in the course of the migration processing when the migration processing is performed and specifying the range with respect to each of the attributes other than the attributes constituting the second attribute group among the attributes constituting the first attribute group, and that
the transfer control means is adapted to perform restoration processing including, in the case where the information quantity stored in the first rule information storage means is smaller than a preset second threshold quantity, if the difference information is stored, generating the first rule information deleted in the course of the migration processing based on the difference information and the second rule information stored in the course of the migration processing, storing the generated first rule information in the first rule information storage means, and deleting the second rule information from the second rule information storage means.

According to this configuration, when the information quantity stored in the first rule information storage section becomes sufficiently small, the relay device is able to restore the first rule information which was the target of the migration processing.

In that case, it is preferable that the first rule information storage means is adapted to, when the relay device receives the first rule information, store the received first rule information.

In that case, it is preferable that the relay device is adapted such that if the attribute information included in the received data satisfies any of the first attribute conditions included in the stored first rule information, the first transfer processing execution means is allowed to transmit the data, while in the case where the attribute information included in the received data does not satisfy any of the first attribute conditions included in the stored first rule information, if the attribute information included in the received data satisfies any of the second attribute conditions included in the stored second rule information, the second transfer processing execution means is allowed to transmit the data.

In that case, it is preferable that the relay device further includes a plurality of ports for connecting the external devices with the relay device, and that
the transfer destination identification information is port identification information for identifying each of the ports.

In that case, it is preferable that the plurality of the attributes include at least one of an IP (Internet Protocol) address of the source of the data, a MAC (Media Access Control) address of the source of the data, an IP address of the destination of the data, and a MAC address of the destination of the data.

Further, a relay method, which is another aspect of the present invention, is applied to a relay device which is connected with each of a plurality of external devices and transmits data received from one of the external devices to a transfer destination device which is another one of the external devices.
The data includes attribute information representing each of a plurality of attributes held by the data.
The relay device includes
a first rule information storage means for storing first rule information for specifying the transfer destination device based on the attribute information with respect to each of the attributes constituting a first attribute group including the plurality of the attributes, and
a second rule information storage means for storing second rule information for specifying the transfer destination device based on the attribute information with respect to each of the one or more attributes constituting a second attribute group including part of the plurality of the attributes.
Further, the method includes
performing migration processing including, in the case where the information quantity stored in the first rule information storage means is larger than a preset first threshold quantity, if the information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

In that case, it is preferable that the relay method further includes
specifying the transfer destination device based on the attribute information included in the received data and the first rule information stored in the first rule information storage means, and transmitting the data to the specified transfer destination device, and
specifying the transfer destination device based on the attribute information included in the received data and the second rule information stored in the second rule information storage means, and transmitting the data to the specified transfer destination device.

Further, a program, which is another aspect of the present invention, is a program implemented by a relay device which is connected with each of a plurality of external devices and transmits data received from one of the external devices to a transfer destination device which is another one of the external devices.

The data includes attribute information representing each of a plurality of attributes held by the data.
The relay device includes
a first rule information storage means for storing first rule information for specifying the transfer destination device based on the attribute information with respect to each of the attributes constituting a first attribute group including the plurality of the attributes, and
a second rule information storage means for storing second rule information for specifying the transfer destination device based on the attribute information of each of the one or more attributes constituting a second attribute group including part of the plurality of the attributes.
Further, the program is a program for causing the relay device to realize a transfer control means for performing migration processing including, in the case where the information quantity stored in the first rule information storage means is larger than a preset first threshold quantity, if the information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

In that case, it is preferable that the program is a program for further causing the relay device to realize
a first transfer processing execution means for specifying the transfer destination device based on the attribute information included in the received data and the first rule information stored in the first rule information storage means, and transmitting the data to the specified transfer destination device, and
a second transfer processing execution means for specifying the transfer destination device based on the attribute information included in the received data and the second rule information stored in the second rule information storage means, and transmitting the data to the specified transfer destination device.

As an invention of a relay method or a program having the above-described configuration has an action similar to that of the relay device, such an invention can also achieve the object of the present invention.

While the present invention has been described with reference to the exemplary embodiments thereof, the present invention is not limited to these embodiments. It will be understood by those skilled in the art that various changes in form and details may be made therein within the scope of the present invention.

It should be noted that in each of the embodiments described above, each of the functions of the relay device 1 is realized by hardware such as a circuit. Meanwhile, the relay device 1 may be adapted to include a processing device and a storage device storing a program (software), in which each of the functions is realized by the processing device which executes the program. In that case, the program may be stored in the storage device or in a computer-readable record medium. A record medium is a portable medium such as a flexible disk, an optical disk, a magneto-optical disk, or a semiconductor memory, for example.

Further, as another exemplary variation of the exemplary embodiments described above, any combination of the exemplary embodiments and exemplary variations, described above, may be adopted.

This application is based upon and claims the benefit of priority from Japanese patent application No. 2009-268484, filed on November 26, 2009, the disclosure of which is incorporated herein in its entirety by reference.

### INDUSTRIAL APPLICABILITY

The present invention is applicable to a router which transfers packets, for example.

### REFERENCE NUMERALS

- 1: relay device
- 2a, 2b, ···: port
- 11: first transfer processing section
- 11a: first rule information storage section
- 11b: first transfer processing execution section
- 12: second transfer processing section
- 12a: second rule information storage section
- 12b: second transfer processing execution section
- 13: transfer control section
- 13a: difference information storage section
- 100: relay device
- 101: first rule information storage section
- 102: second rule information storage section
- 103: transfer control section

## Claims

1. A relay device which is connected with each of a plurality of external devices and transmits data received from one of the external devices to a transfer destination device which is another one of the external devices, the data including attribute information representing each of a plurality of attributes held by the data, the relay device comprising:
first rule information storage means for storing first rule information for specifying the transfer destination device based on attribute information with respect to each of attributes constituting a first attribute group including the plurality of the attributes;
second rule information storage means for storing second rule information for specifying the transfer destination device based on attribute information with respect to each of one or more attributes constituting a second attribute group including part of the plurality of the attributes; and
transfer control means for performing migration processing including, in a case where an information quantity stored in the first rule information storage means is larger than a preset first threshold quantity, if information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

2. The relay device according to Claim 1, further comprising:
first transfer processing execution means for specifying the transfer destination device based on the attribute information included in the received data and the first rule information stored in the first rule information storage means, and transmitting the data to the specified transfer destination device; and
second transfer processing execution means for specifying the transfer destination device based on the attribute information included in the received data and the second rule information stored in the second rule information storage means, and transmitting the data to the specified transfer destination device.

3. The relay device according to Claim 2, wherein
the first rule information includes one or more first attribute conditions with respect to the first attribute group, and transfer destination identification information for identifying the transfer destination device,
the second rule information includes one or more second attribute conditions with respect to the second attribute group, and transfer destination identification information for identifying the transfer destination device,
the first transfer processing execution means is adapted to, if the attribute information included in the received data satisfies any of the first attribute conditions included in the stored first rule information, transmit the data to the transfer destination device identified by the transfer destination identification information included in the first rule information including the satisfied first attribute condition,
the second transfer processing execution means is adapted to, if the attribute information included in the received data satisfies any of the second attribute conditions included in the stored second rule information, transmit the data to the transfer destination device identified by the transfer destination identification information included in the second rule information including the satisfied second attribute condition, and
the transfer control means is adapted to perform the migration processing including, in the case where the information quantity stored in the first rule information storage means is larger than the first threshold quantity, if the first rule information including conditions only with respect to the second attribute group as the first attribute conditions is stored in the first rule information storage means, storing, in the second rule information storage means, the second rule information which includes the first attribute conditions included in the first rule information as the second attribute conditions and includes the transfer destination identification information included in the first rule information, and deleting the first rule information from the first rule information storage means.

4. The relay device according to Claim 3, wherein
one of the first attribute conditions is that first range specifying information representing a range of the attribute information with respect to each of the attributes constituting the first attribute group is included, and that with respect to each of the attributes constituting the first attribute group, the attribute information included in the data is within the range represented by the first range specifying information,
one of the second attribute conditions is that second range specifying information representing a range of the attribute information with respect to each of the attributes constituting the second attribute group is included, and that with respect to each of the attributes constituting the second attribute group, the attribute information included in the data is within the range represented by the second range specifying information, and
the transfer control means is adapted to perform the migration processing including, in the case where the information quantity stored in the first rule information storage means is larger than the first threshold quantity, if the first rule information is stored in the first rule information storage means, the first rule information including the first range specifying information specifying the range including arbitrary attribute information with respect to each of attributes other than the attributes constituting the second attribute group among the attributes constituting the first attribute group, storing, in the second rule information storage means, the second rule information which includes the second attribute conditions including the second range specifying information including part specifying the range with respect to each of the attributes constituting the second attribute group of the first range specifying information, and includes the transfer destination identification information included in the first rule information, and deleting the first rule information from the first rule information storage means.

5. The relay device according to Claim 4, further comprising
difference information storage means for storing, as difference information, part constituting a portion of the first range specifying information included in the first rule information to be deleted in a course of the migration processing when the migration processing is performed and specifying the range with respect to each of the attributes other than the attributes constituting the second attribute group among the attributes constituting the first attribute group, wherein
the transfer control means is adapted to perform restoration processing including, in a case where the information quantity stored in the first rule information storage means is smaller than a preset second threshold quantity, if the difference information is stored, generating the first rule information deleted in the course of the migration processing based on the difference information and the second rule information stored in the course of the migration processing, storing the generated first rule information in the first rule information storage means, and deleting the second rule information from the second rule information storage means.

6. The relay device according to any of Claims I to 5, wherein
the first rule information storage means is adapted to, when the relay device receives the first rule information, store the received first rule information.

7. The relay device according to any of Claims 3 to 6, wherein
if the attribute information included in the received data satisfies any of the first attribute conditions included in the stored first rule information, the first transfer processing execution means is allowed to transmit the data, while in a case where the attribute information included in the received data does not satisfy any of the first attribute conditions included in the stored first rule information, if the attribute information included in the received data satisfies any of the second attribute conditions included in the stored second rule information, the second transfer processing execution means is allowed to transmit the data.

8. The relay device according to any of Claims 3 to 7, further comprising a plurality of ports for connecting the external devices with the relay device, wherein the transfer destination identification information is port identification information for identifying each of the ports.

9. The relay device according to any of Claims 1 to 8, wherein
the plurality of the attributes include at least one of an IP (Internet Protocol) address of a source of the data, a MAC (Media Access Control) address of the source of the data, an IP address of a destination of the data, and a MAC address of the destination of the data.

10. A relay method applied to a relay device which is connected with each of a plurality of external devices and transmits data received from one of the external devices to a transfer destination device which is another one of the external devices, the data including attribute information representing each of a plurality of attributes held by the data,
the relay device including:
first rule information storage means for storing first rule information for specifying the transfer destination device based on attribute information with respect to each of attributes constituting a first attribute group including the plurality of the attributes; and
second rule information storage means for storing second rule information for specifying the transfer destination device based on attribute information with respect to each of one or more attributes constituting a second attribute group including part of the plurality of the attributes,
the method comprising
performing migration processing including, in a case where an information quantity stored in the first rule information storage means is larger than a preset first threshold quantity, if information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

11. The relay method according to Claim 10, further comprising:
specifying the transfer destination device based on the attribute information included in the received data and the first rule information stored in the first rule information storage means, and transmitting the data to the specified transfer destination device; and
specifying the transfer destination device based on the attribute information included in the received data and the second rule information stored in the second rule information storage means, and transmitting the data to the specified transfer destination device.

12. A program implemented by a relay device which is connected with each of a plurality of external devices and transmits data received from one of the external devices to a transfer destination device which is another one of the external devices, the data including attribute information representing each of a plurality of attributes held by the data,
the relay device including:
first rule information storage means for storing first rule information for specifying the transfer destination device based on attribute information with respect to each of attributes constituting a first attribute group including the plurality of the attributes; and
second rule information storage means for storing second rule information for specifying the transfer destination device based on attribute information with respect to each of one or more attributes constituting a second attribute group including part of the plurality of the attributes,
the program causing the relay device to realize transfer control means for performing migration processing including, in a case where an information quantity stored in the first rule information storage means is larger than a preset first threshold quantity, if information for specifying the transfer destination device only based on the attribute information with respect to each of the attributes constituting the second attribute group is stored in the first rule information storage means as the first rule information, storing the first rule information as the second rule information in the second rule information storage means, and deleting the first rule information from the first rule information storage means.

13. The program according to Claim 12, further causing the relay device to realize:
first transfer processing execution means for specifying the transfer destination device based on the attribute information included in the received data and the first rule information stored in the first rule information storage means, and transmitting the data to the specified transfer destination device; and
second transfer processing execution means for specifying the transfer destination device based on the attribute information included in the received data and the second rule information stored in the second rule information storage means, and transmitting the data to the specified transfer destination device.
